# FASCICULE DE BREVET EUROPEEN

(11) **EP 0 515 897 B1**
(45) Date de publication et mention de la délivrance du brevet: **11.09.1996**
(21) Numéro de dépôt: 92107977.8
(22) Date de dépôt: 12.05.1992
(51) Int. Cl.: G06K 7/06

(54) **Connecteur pour carte à circuits**
Kontaktgeber für Karten mit Schaltkreis
Circuit cards connector

(30) Priorité: 13.05.1991 FR 9105756
(43) Date de publication de la demande: 02.12.1992
(73) Titulaire: FRAMATOME CONNECTORS PONTARLIER, 92400 Courbevoie (FR)
(72) Inventeur: Duffet, Guy, F-25300 Pontarlier (FR); Grandgirard, Paul, F-25000 Besançon (FR)
(74) Mandataire: Weinmiller, Jürgen

(56) Documents cités:
- EP-A- 0 186 737
- FR-A- 2 541 018
- US-A- 4 810 203

## Description

La présente invention concerne un connecteur pour carte à circuits, et en particulier pour carte à puce. On entend par carte à puce une carte incluant au moins un composant électronique avec lequel des connexions électriques doivent être établies dans un lecteur équipant par exemple un taxiphone ou un appareil bancaire.

La présente invention concerne plus précisément un connecteur pour carte à puce ayant des dimensions réduites (15X25 mm) par rapport à celles des cartes à puce standard bien connues (54X85 mm). De telles cartes, que l'on appelera dans la suite "minicartes", comportent les mêmes circuits et le même système de connexion que les cartes standard. Leur domaine d'utilisation est par exemple celui du radiotéléphone portatif. Elles sont en effet prévues pour être utilisées dans les radiotéléphones portatifs afin d'identifier le propriétaire ou le locataire d'un appareil, entre autres fonctions. En général, il est spécifié que ces minicartes doivent être insérées dans les connecteurs par des agents qualifiés, et non par l'utilisateur final, comme c'est le cas pour les cartes standard, et qu'elles doivent demeurer dans les appareils pendant un certain temps.

Dans les connecteurs pour cartes standard connus, la mise en place des cartes se fait par une fente frontale ménagée dans l'appareil. Ces connecteurs sont décrits par exemple dans le brevet US-4 743 746. Ils comportent un étui de guidage dans lequel est introduite la carte par une fente frontale d'introduction et dans une position légèrement inclinée par rapport à un plan médian du connecteur. La carte est ensuite amenée en position de lecture, c'est-à-dire mise en contact avec les circuits électriques de l'appareil dans lequel est installé le connecteur.

Dans ce type de connecteurs, une zone doit être laissée libre face à la fente d'introduction. Cette zone doit être suffisamment grande pour prendre en compte l'encombrement de la carte elle-même et des doigts de l'opérateur qui l'introduit. Ce critère est donc très contraignant dans le cas des minicartes destinées à être installées dans des appareils de petite taille et de faible volume, typiquement "de poche", pour lesquels on demande un encombrement minimal.

D'autre part, l'utilisation d'un étui de guidage augmente l'épaisseur du connecteur. Ceci est encore un facteur contraignant dans le cas des minicartes pour appareils portatifs. Certaines applications demandent en effet une épaisseur maximale de 3 mm pour le connecteur, alors que l'étui de guidage a déjà une épaisseur d'environ 2 mm.

En outre, les applications habituelles des appareils à fente n'exigent pas une protection absolue contre d'éventuels déplacements de la carte dus à des chocs ou des vibrations, car les appareils à fente sont en général installés sur un socle fixe. De plus dans de tels appareils, l'utilisateur a accès à la carte et a donc la possibilité de remettre la carte en place si celle-ci est mal introduite. Au contraire, les appareils ou combinés "de poche" sont destinés à être transportés et à subir de nombreux mouvements, et de surcroît, l'utilisateur ne doit pas avoir accès à la minicarte pour la remettre en place. Les connecteurs utilisés dans les appareils à fente seraient alors d'un emploi peu avantageux pour les applications auxquelles sont vouées les minicartes.

Enfin, lors de l'introduction de la carte dans l'étui, il peut y avoir frottement des circuits portés par cette dernière sur la paroi interne de l'étui. Ceci risque d'endommager de manière préjudiciable les circuits de la carte.

Un but de la présente invention est donc de réaliser un connecteur pour cartes à circuits d'encombrement minimal et qui permette un maintien fiable de la carte.

Un autre but de la présente invention est de réaliser un connecteur pour cartes à circuits répondant aux exigences requises pour l'utilisation dans des appareils "de poche" de faible volume.

La présente invention propose à cet effet un connecteur pour carte à circuits comprenant un cadre comportant :
- des moyens de positionnement de ladite carte dans une position dite d'introduction,
- des moyens de maintien de ladite carte en position de lecture parallèle à un plan médian dudit connecteur c'est-à-dire en contact avec des éléments de contact assurant le raccordement électrique desdits circuits de ladite carte à un appareil dans lequel est installé ledit connecteur, ladite position d'introduction étant inclinée par rapport à ladite position de lecture,

caractérisé en ce que lesdits moyens de positionnement comprennent une rainure destinée à recevoir un premier côté de ladite carte, ladite rainure étant formée par au moins une pièce fixe et au moins une pièce mobile venant respectivement en contact avec une première face et une deuxième face de ladite carte, ladite pièce mobile venant appuyer ladite carte contre ladite pièce fixe pour maintenir ladite carte dans sa position inclinée d'introduction,
et en ce que lesdits moyens de maintien de ladite carte en position de lecture sont situés en contact avec ledit premier côté et avec un second côté opposé audit premier côté, ladite carte passant de ladite position inclinée à ladite position de lecture par basculement autour d'un axe parallèle à ladite rainure, ledit basculement provoquant le déplacement de ladite pièce mobile par élasticité de sorte que ladite pièce mobile vient appuyer ladite carte contre ladit pièce fixe pour maintenir ladite carte dans sa position de lecture.

Les petites dimensions des minicartes assurant une plus grande rigidité de ces dernières, il est possible, grâce à l'invention, d'une part d'exercer directement la force de basculement sur la carte, et d'autre part de ne maintenir cette dernière que par deux de ses côtés. On évite ainsi d'avoir à utiliser un étui de guidage et des moyens de maintien encombrants, ce qui assure au connecteur selon l'invention un faible encombrement.

Par ailleurs, l'utilisation d'une pièce mobile et d'une pièce fixe pour assurer, par élasticité, à la fois le maintien de la carte en position inclinée et son maintien en position de lecture permet de simplifier le connecteur et de garantir un maintien sûr de la carte.

Avantageusement, les moyens de positionnement comprennent :
- au moins un premier rebord appartenant à la pièce fixe de la rainure et prolongeant la matière du cadre en s'étendant vers l'intérieur du cadre, ce premier rebord venant en contact avec une première face de la carte en position inclinée,
- au moins un second rebord appartenant à la pièce mobile de la rainure et situé en regard du premier rebord pour venir en contact avec la seconde face de la carte en position inclinée,
- des moyens de butée pour arrêter la progression de la carte en position inclinée.

En outre, les moyens de maintien comprennent :
- la pièce fixe de la rainure prolongeant la matière du cadre en s'étendant vers l'intérieur du cadre et ayant un bord inférieur parallèle au plan médian, pour venir en contact avec la première face de la carte en position de lecture, au voisinage du premier côté,
- la pièce mobile de la rainure constituée d'une pièce élastique allongée pourvue d'une extrémité appuyant sur la carte et pressant celle-ci contre le bord inférieur de la pièce fixe de la rainure d'une part, et contre le bec d'un verrou élastique opposé à la pièce fixe d'autre part, cette extrémité étant située à proximité de la pièce fixe de la rainure.

La simplicité des moyens de positionnement et des moyens de maintien diminue l'encombrement du connecteur. Cette simplicité est rendue possible par la grande rigidité de la minicarte.

En outre le fait de se passer d'un étui de guidage permet d'effectuer l'introduction de la carte par le dessus du connecteur, sans nécessiter l'utilisation d'une fentre frontale impliquant une zone disponible importante. Ceci réduit encore l'encombrement du connecteur.

De manière avantageuse le premier rebord peut être biseauté pour épouser une partie de la première face de la carte en position inclinée.

De même, le second rebord peut être biseauté pour épouser une partie de la seconde face de la carte en position inclinée.

Par ailleurs, les moyens de butée comprennent une pluralité de pièces prolongeant la matière du cadre en s'étendant vers l'intérieur du cadre et ayant chacun un bord supérieur parallèle au plan médian.

Les moyens de butée peuvent être constitués par les éléments de contact.

Le cadre peut comprendre en outre des moyens de vérification de la présence de la carte et du bon positionnement de cette dernière.

Le cadre, les moyens de positionnement et les moyens de maintien peuvent tous appartenir à une seule pièce moulée en plastique.

Enfin des verrous élastiques peuvent être installés sur tout le pourtour du cadre.

D'autres caractéristiques et avantages de la présente invention apparaîtront dans la description suivante d'un connecteur selon l'invention, donnée à titre illustratif et nullement limitatif.

Dans les figures suivantes :
- la figure 1 montre en vue de dessus un connecteur selon l'invention avec une minicarte en position de lecture,
- la figure 2 est une coupe selon la ligne III-III de la figure 1 montrant le connecteur selon l'invention avec la minicarte en position d'introduction,
- la figure 3 est une coupe selon la ligne III-III de la figure 1, montrant le connecteur selon l'invention avec la minicarte en position de lecture,
- la figure 4 est une vue de dessus d'un autre connecteur selon l'invention avec la minicarte en position de lecture.

Dans ces figures, les éléments communs sont référencés avec les mêmes numéros.

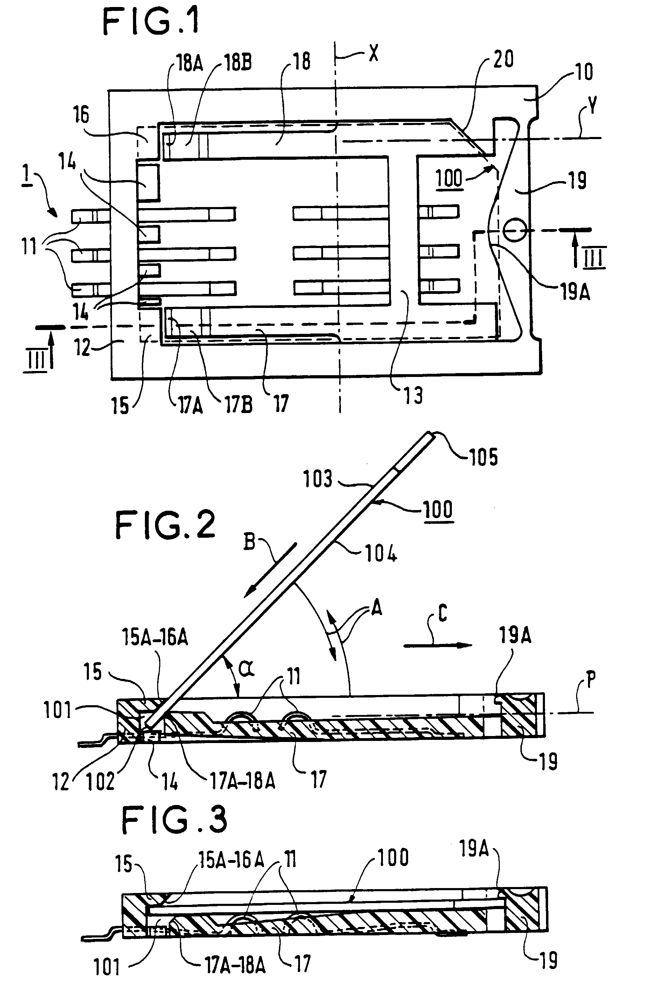

Dans les figures 1 à 3, un connecteur 1 selon l'invention comporte un cadre de contact 10 sensiblement rectangulaire et des lames de contact métalliques et élastiques 11 surmoulées dans des barreaux 12 et 13 du cadre de contact 10 (le barreau 12 forme l'un des petits côtés du cadre 10 et le barreau 13 lui est parallèle). Les lames 11 sont installées de manière à dépasser légèrement au-dessus d'un plan médian P du connecteur 1 (voir figure 2). Le cadre 10 est en outre muni, selon l'invention, de butées 14 prolongeant la matière du barreau 12 en s'étendant vers l'intérieur du cadre 10, et ayant chacune un bord supérieur parallèle au plan P. Les butées 14 sont intercalées entre les lames de contact 11 surmoulées dans ce barreau.

A chacune des extrémités du barreau 12 se trouvent en outre respectivement deux pièces fixes parallélépipédiques 15 et 16 appelées "casquettes" car elles présentent, comme cela est visible dans les figures 2 ou 3, un rebord biseauté incliné 15A et 16A ressemblant à la visière d'une casquette. Les casquettes 15 et 16 s'étendent vers l'intérieur du cadre 10.

Deux pièces mobiles élastiques 17 et 18, de grande longueur devant leur largeur, sont solidaires du barreau 13 et viennent en regard des casquettes 15 et 16. Elles présentent de plus une longueur importante en porte-à-faux par rapport au barreau 13, et peuvent subir des déformations élastiques, de sorte qu'elles remplissent toutes deux un rôle de levier que l'on expliquera plus en détail par la suite. Dans ce rôle, elles peuvent effectuer des mouvements de rotation autour d'un axe X orthogonal à leur axe longitudinal Y et appartenant à un plan parallèle au plan P, pour passer d'une position haute qui est leur position de repos représentée à la figure 2, à une position opérationnelle basse représentée en figure 3. Leur rebord 17A et 18A en regard des casquettes 15 et 16 est également biseauté.

Par ailleurs, le petit côté du cadre 10 opposé au barreau 12 est constitué d'un verrou élastique 19. Ce verrou 19 a une forme sensiblement triangulaire sur la figure 1, une de ses pointes 19A étant arrondie et s'étendant vers l'intérieur du cadre 10. Cette pointe arrondie 19A constitue un décrochement ou bec dans le plan des figures 2 et 3. Le verrou 19 peut effectuer des mouvements de translation le long de l'axe Y.

Enfin, le cadre 10 comporte un chanfrein de détrompage 20 qui empêche un mauvais positionnement des circuits d'une minicarte 100 (représentée en trait interrompus pour de plus de clarté) par rapport aux lames 11.

Les éléments 10, 12, 13, 14, 15, 16, 17, 18 et 19 peuvent avantageusement tous provenir d'un moulage unique d'une seule pièce en plastique.

Pour mieux comprendre l'invention, on va maintenant s'attacher à décrire, en parallèle avec les figures 2 et 3, le fonctionnement du connecteur 1.

L'introduction de la minicarte 100 dans le connecteur 1 se fait en position inclinée par rapport au plan P comme cela est indiqué par la flèche B à la figure 2. L'angle d'inclinaison α est à la fois l'angle d'inclinaison des rebords 15A et 16A des casquettes 15 et 16 et celui des rebords 17A et 18A des leviers 17 et 18 au repos.

Une rainure 101 formée par les butées 14, les rebords 15A et 17A et les rebords 16A et 18A permet le passage de la minicarte 100. Le petit côté 102 de cette dernière vient alors en butée contre les butées 14, de sorte que les rebords 15A et 16A épousent sur leur longueur une partie de la face 103 de la minicarte 100, et les rebords 17A et 18A épousent également sur leur longueur une partie de la face 104 de la minicarte 100.

Lorsque l'opérateur exerce une force F sur le côté 105 (opposé au côté 102) de la minicarte 100, celle-ci bascule suivant la flèche A autour d'un axe parallèle à l'axe X et appartenant à la rainure 101. Elle imprime alors une pression sur les leviers 17 et 18 qui passent en position basse. Les dimensions de la rainure 101 sont adaptées pour permettre le pivotement de la minicarte 100.

Lorsque le côté 105 vient en contact avec le verrou 19 puis exerce sur lui une force sous l'action de l'opérateur, le verrou 19 s'écarte de sa position initiale en reculant dans le sens de la flèche C pour laisser passer le côté 105, puis revient à sa position initiale une fois que le côté 105 de la minicarte 100 se trouve arrêté par le bec 19A, c'est-à-dire que la minicarte 100 est bloquée par le retour du verrou 19 et ne peut plus revenir à sa position inclinée d'introduction. La figure 3 montre la minicarte 100 installée dans le connecteur 1 et en position de lecture, en contact avec les lames de contact 11.

On va maintenant expliquer en détail le rôle des leviers 17 et 18. Dans leur position haute de repos, ils servent à maintenir la carte de manière stable en position d'introduction sous l'angles α, en la soutenant pour qu'elle reste en contact avec les rebords 15A et 16A des casquettes 15 et 16. Ceci permet à l'opérateur de lâcher la carte avant de la faire basculer vers le verrou 19. Dans leur position basse, les extrémités profilées 17B et 18B des leviers 17 et 18 pressent la minicarte 100 en appui vers le haut contre les casquettes 15 et 16, de sorte que la minicarte 100 reste maintenue, par rapport aux lames 11, dans une position stable définie par les casquettes 15 et 16 et le verrou 19; ceci assure une déformation en flexion des lames 11 bien définie, et donc une pression de contact électrique requise qui permet de garantir la résistance électrique de contact nécessaire.

Le démontage de la minicarte 100 ainsi installée se fait simplement en tirant le verrou 19 dans le sens de la flèche C, ce qui provoque le basculement quasi-immédiat de la minicarte 100 selon la flèche A dans sa position d'introduction grâce à l'élasticité des leviers 17 et 18 jouant alors le rôle de ressorts. Ainsi, le démontage (et le montage) de la minicarte est aisé et ne nécessite pas l'usage d'un outil spécifique.

Par ailleurs, l'angle α est choisi de manière à ce que l'opérateur puisse saisir et introduire aisément la minicarte 100. En pratique, il peut par exemple varier entre 35 et 55°, mais il dépend principalement des dimensions de la carte à introduire.

Le connecteur selon l'invention est avantageusement adapté aux minicartes, car ces dernières, tout en ayant une épaisseur identique à celle des cartes standard, ont une longueur et une largeur bien inférieures, ce qui augmente leur rigidité. Ainsi, les déformations de la carte par rapport à son plan médian restent dans les tolérances exigées lorsque celle-ci n'est maintenue contre les lames de contact que par deux de ses côtés opposés. L'étui de guidage et la fente frontale des connecteurs de l'art antérieur deviennent alors inutiles. Ainsi l'encombrement du connecteur selon l'invention est minimal.

En outre, grâce aux leviers 17 et 18, la pression de contact requise est appliquée aux lames 11, le maintien de la carte en position stable, lors de l'introduction ou de la lecture, quels que soient les mouvements subis par l'appareil, est assuré, et enfin, le montage et le démontage de la carte sont aisés et ne nécessitent pas l'utilisation d'outils spécifiques.

Le connecteur selon l'invention répond donc aux exigences requises pour l'utilisation dans des appareils "de poche".

Par ailleurs, il n'y a pas de frottement de la carte lors de son introduction; ceci évite d'endommager les circuits de la carte.

Le connecteur selon l'invention qui vient d'être décrit peut présenter plusieurs variantes que l'on va exposer à présent.

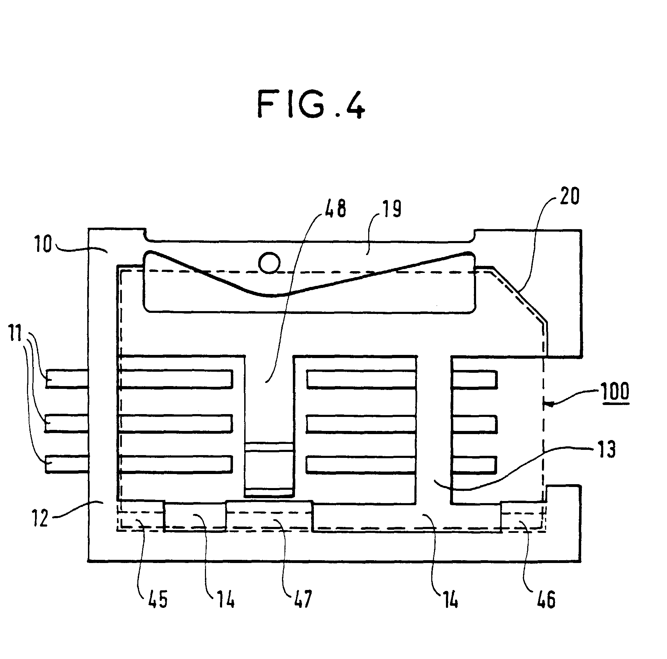

En premier lieu, comme cela est représenté en figure 4, le connecteur selon l'invention peut être prévu pour que la carte bascule selon l'un des ses grands côtés. Dans ce cas, la flexion de la carte sous l'effet des forces exercées par les lames de contact 11 est plus faible, car la portée de la carte entre ses deux appuis opposés (les casquettes et le verrou) a pour dimension la largeur de la carte, et non sa longueur, comme c'est le cas dans le connecteur représenté aux figures 1 à 3.

De ce fait, un seul levier central 48 est nécessaire, mais il est préférable de prévoir une casquette supplémentaire 47 en plus des casquettes 45 et 46, située en regard du levier central 48. Les autres éléments sont semblables à ceux du connecteur 1 des figures précédentes et ne seront pas décrits plus en détail.

Selon une autre variante, les butées 14 sont supprimées, et leur rôle est alors joué par les lames de contact 11 surmoulées dans le barreau 12. Ceci permet de diminuer le coût du moulage.

Enfin, selon une dernière variante, le verrou 19 n'est pas moulé avec les autres éléments, mais comprend une pièce rapportée fixée sur le cadre 10. Bien entendu, tout type de verrouillage connu dans le domaine des cartes à circuits peut être utilisé.

Les variantes précédentes présentent les mêmes avantages que le connecteur 1 des figures 1 à 3.

Des verrous supplémentaires, analogues au verrou 19, peuvent être prévus sur le pourtour du cadre 10. Ceci améliore la tenue de la carte.

Le connecteur selon l'invention peut également comporter des contacts électriques de fin de course situés à l'opposé des casquettes dans le cadre 10, et destinés à vérifier qu'une carte est présente dans l'appareil et qu'elle se trouve dans la position adéquate.

Enfin, le connecteur selon l'invention peut être adapté à toute carte à circuits du moment que cette dernière présente une rigidité suffisante.

## Revendications

1. Connecteur pour carte à circuits comprenant un cadre comportant :
- des moyens de positionnement de ladite carte dans une position dite d'introduction,
- des moyens de maintien de ladite carte en position de lecture parallèle à un plan médian dudit connecteur c'est-à-dire en contact avec des éléments de contact assurant le raccordement électrique desdits circuits de ladite carte à un appareil dans lequel est installé ledit connecteur, ladite position d'introduction étant inclinée par rapport à ladite position de lecture,
caractérisé en ce que lesdits moyens de positionnement (14, 15, 16, 17, 18) comprennent une rainure (101) destinée à recevoir un premier côté (102) de ladite carte (100), ladite rainure étant formée par au moins une pièce fixe (15, 16) et au moins une pièce mobile (17, 18) venant respectivement en contact avec une première face (103) et une deuxième face (104) de ladite carte (100), ladite pièce mobile (17, 18) venant appuyer ladite carte (100) contre ladite pièce fixe (15, 16) pour maintenir ladite carte (100) dans sa position inclinée d'introduction,
et en ce que lesdits moyens de maintien (15, 17; 16, 18; 19) de ladite carte (100) en position de lecture sont situés en contact avec ledit premier côté (102) et avec un second côté (105) opposé audit premier côté (102), ladite carte (100) passant de ladite position inclinée à ladite position de lecture par basculement autour d'un axe parallèle à ladite rainure (101), ledit basculement provoquant le déplacement de ladite pièce mobile (17, 18) par élasticité de sorte que ladite pièce mobile (17, 18) vient appuyer ladite carte (100) contre ladite pièce fixe (15, 16) pour maintenir ladite carte (100) dans sa position de lecture.

2. Connecteur selon la revendication 1 caractérisé en ce que lesdits moyens de positionnement comprennent :
- au moins un premier rebord (15A, 16A) appartenant à ladite pièce fixe (15, 16) et prolongeant la matière dudit cadre (10), en s'étendant vers l'intérieur dudit cadre (10), ledit premier rebord (15A, 16A) venant en contact avec ladite première face (103) de ladite carte (100) en position inclinée,
- au moins un second rebord (17A, 18A) appartenant à ladite pièce mobile (17, 18) et situé en regard dudit premier rebord (15A, 16A) pour venir en contact avec ladite seconde face (104) de ladite carte (100) en position inclinée.
- des moyens de butée (14) pour arrêter la progression de ladite carte (100) en position inclinée.

3. Connecteur selon l'une des revendications 1 ou 2 caractérisé en ce que lesdits moyens de maintien comprennent :
- ladite pièce fixe (15, 16) prolongeant la matière dudit cadre (10) en s'étendant vers l'intérieur dudit cadre (10) et ayant un bord inférieur parallèle audit plan médian (P), pour venir en contact avec ladite première face (103) de ladite carte (100) en position de lecture, au voisinage dudit premier côté (102),
- ladite pièce mobile constituée d'une pièce élastique allongée (17, 18) pourvue d'une extrémité (17B, 18B) appuyant sur ladite carte (100) et pressant celle-ci contre ledit bord inférieur de ladite pièce fixe (15, 16) d'une part, et contre le bec (19A) d'un verrou élastique (19) opposé à ladite pièce fixe (15, 16) d'autre part, ladite extrémité (17B, 18B) étant située à proximité de ladite pièce fixe (15, 16).

4. Connecteur selon l'un des revendications 2 ou 3 caractérisé en ce que ledit premier rebord (15A, 16A) est biseauté pour épouser une partie de ladite première face (103) de ladite carte (100) en position inclinée.

5. Connecteur selon l'une des revendications 2 à 4 caractérisé en ce que ledit second rebord (17A, 18A) est biseauté pour épouser une partie de ladite seconde face (104) de ladite carte (100) en position inclinée.

6. Connecteur selon l'un des revendications 2 à 5 caractérisé en ce que lesdits moyens de butée (14) comprennent une pluralité de pièces prolongeant la matière dudit cadre (10) en s'étendant vers l'intérieur dudit cadre (10) et ayant chacun un bord supérieur parallèle audit plan médian (P).

7. Connecteur selon l'une des revendications 2 à 6, caractérisé en ce que lesdits moyens de butée (14) sont constitués par lesdits éléments de contact (11).

8. Connecteur selon l'une des revendications 1 à 7, caractérisé en ce que ledit cadre (10) comprend en outre des moyens de vérification de la présence de ladite carte (100) et du bon positionnement de cette dernière.

9. Connecteur selon l'une des renvendications 1 à 8 caractérisé en ce que ledit cadre (10), lesdits moyens de positionnement (14, 15, 16, 17, 18) et lesdits moyens de maintien (15, 17; 16, 18; 19) appartiennent tous à une seule pièce moulée en plastique.

10. Connecteur selon l'une des revendications 1 à 9, caractérisé en ce que des verrous élastiques sont installés sur tout le pourtour dudit cadre.

## Patentansprüche

1. Anschlußorgan für eine Karte mit Schaltkreisen, das einen Rahmen aufweist,
- mit Mitteln zur Positionierung der Karte in einer sogenannten Einführungsstellung,
- mit Mitteln zum Halten der Karte in einer Lesestellung parallel zu einer mittleren Ebene des Anschlußorgans, d.h. in Kontakt mit Kontaktelementen, die den elektrischen Anschluß der Schaltkreise der Karte an ein Gerät sichern, in dem dieses Anschlußorgan installiert ist, wobei die Einführungsstellung bezüglich der Lesestellung geneigt ist, dadurch gekennzeichnet, daß die Positioniermittel (14, 15, 16, 17, 18) eine Rinne (101) aufweisen, die eine erste Kante (102) der Karte (100) aufnehmen soll und von mindestens einem unbeweglichen Bauteil (15, 16) und mindestens einem beweglichen Bauteil (17, 18) gebildet wird, die in Kontakt mit einer ersten Seite (103) bzw. einer zweiten Seite (104) der Karte (100) gelangen, wobei das bewegliche Bauteil (17, 18) die Karte (100) gegen das unbewegliche Bauteil (15, 16) drückt, um die Karte (100) in ihrer geneigten Einführungsstellung zu halten,
und daß die Mittel (15, 17; 16, 18; 19) zum Halten der Karte (100) in der Lesestellung mit der ersten Kante (102) und mit einer zur ersten Kante (102) entgegengesetzt liegenden zweiten Kante (105) in Kontakt stehen, daß die Karte (100) durch Kippen um eine Achse parallel zu der Rinne (101) aus der geneigten Stellung in die Lesestellung gelangt, daß durch das Kippen das bewegliche Bauteil (17, 18) elastisch verschoben wird, so daß das bewegliche Bauteil (17, 18) die Karte (100) gegen das unbewegliche Bauteil (15, 16) drückt, um die Karte in ihrer Lesestellung zu halten.

2. Anschlußorgan nach Anspruch 1, dadurch gekennzeichnet, daß die Positioniermittel aufweisen:
- mindestens eine erste Schulter (15A, 16A), die zum unbeweglichen Bauteil (15, 16) gehört und das Material des Rahmens (10) verlängert, indem sie sich nach der Innenseite des Rahmens (10) erstreckt, wobei die erste Schulter (15A, 16A) mit einer ersten Seite (103) der Karte (10) in der geneigten Stellung in Kontakt gelangt,
- mindestens eine zweite Schulter (17A, 18A), die zum beweglichen Bauteil (17, 18) gehört und der ersten Schulter (15A, 16A) gegenüberliegt, um mit der zweiten Seite (104) der Karte (100) in der geneigten Stellung in Kontakt zu gelangen,
- Anschlagmittel (14), um das Einschieben der Karte (100) in der geneigten Stellung zu begrenzen.

3. Anschlußorgan nach einem der Ansprüche 1 oder 2, dadurch gekennzeichnet, daß die Haltemittel aufweisen:
- das unbewegliche Bauteil (15, 16), das das Material des Rahmens (10) in Richtung zur Innenseite des Rahmens (10) verlängert und einen unteren, zur mittleren Ebene (P) parallelen Rand besitzt, der mit der ersten Seite (103) der Karte (100) in der Lesestellung in der Nähe von deren erster Kante (102) in Kontakt gelangt,
- das bewegliche Bauteil, bestehend aus einem länglichen elastischen Bauteil (17, 18), das mit einem Ende (17B, 18B) auf die Karte (100) drückt und diese gegen den unteren Rand des unbeweglichen Bauteils (15, 16) einerseits und gegen die Nase (19A) eines elastischen Riegels (19) entgegengesetzt zum unbeweglichen Bauteil (15, 16) andererseits drückt, wobei das Ende (17B, 18B) in der Nähe des unbeweglichen Bauteils (15, 16) liegt.

4. Anschlußorgan nach einem der Ansprüche 2 oder 3, dadurch gekennzeichnet, daß die erste Schulter (15A, 16A) abgeschrägt ist, in Anpassung an einen Teil der ersten Seite (103) der Karte in der geneigten Stellung.

5. Anschlußorgan nach einem der Ansprüche 2 bis 4, dadurch gekennzeichnet, daß die zweite Schulter (17A, 18A) abgeschrägt ist in Anpassung an einen Teil der zweiten Seite (104) der Karte (100) in geneigter Stellung.

6. Anschlußorgan nach einem der Ansprüche 2 bis 5, dadurch gekennzeichnet, daß die Anschlagmittel (14) mehrere Bauteile enthalten, die das Material des Rahmens (10) in Richtung zur Innenseite des Rahmens (10) verlängern und je einen oberen Rand parallel zur mittleren Ebene (P) besitzen.

7. Anschlußorgan nach einem der Ansprüche 2 bis 6, dadurch gekennzeichnet, daß die Anschlagmittel (14) aus den Kontaktelementen (11) bestehen.

8. Anschlußorgan nach einem der Ansprüche 1 bis 7, dadurch gekennzeichnet, daß der Rahmen (10) außerdem Mittel aufweist, die das Vorliegen einer Karte und ihre richtige Lage überprüfen.

9. Anschlußorgan nach einem der Ansprüche 1 bis 8, dadurch gekennzeichnet, daß der Rahmen (10), die Positioniermittel (14, 15, 16, 17, 18) und die Haltemittel (15, 17,; 16, 18; 19) alle zu einem gemeinsamen Gießbauteil gehören.

10. Anschlußorgan nach einem der Ansprüche 1 bis 9, dadurch gekennzeichnet, daß elastische Riegel über den ganzen Umfang des Rahmens verteilt angeordnet sind.

## Claims

1. Connector for a card containing an electronic circuit comprising a frame comprising:
- means for locating said card in an insertion position,
- means for holding said card in a reading position parallel to a median plane of said connector in contact with contact members which electrically connect said circuit of said card to a device in which said connector is installed, said insertion position being inclined relative to said reading position,
characterised in that said locating means (14, 15, 16, 17, 18) comprise a groove (101) adapted to receive a first edge (102) of said card (100) formed by at least one fixed part (15, 16) and at least one mobile part (17, 18) respectively adapted to contact a first side (103) and a second side (104) of said card (100), said mobile part (17, 18) pressing said card (100) against said fixed part (15, 16) to hold said card (100) in its inclined insertion position, and in that said means (15, 17; 16, 18; 19) for holding said card (100) in said reading position are disposed in contact with said first edge (102) and with a second edge (105) opposite said first edge (102), said card (100) moving from said inclined position to said reading position by tilting about an axis parallel to said groove (101), said tilting causing displacement of said mobile part (17, 18) by virtue of elasticity so that said mobile part (17, 18) urges said card (100) against said fixed part (15, 16) to hold said card (100) in said reading position.

2. Connector according to claim 1 characterised in that said locating means comprise:
- at least a first lip (15A, 16A) which is part of said fixed part (15, 16) and extends said frame (10) inwardly, said first lip (15A, 16A) being in contact with said first side (103) of said card (100) in said inclined position,
- at least a second lip (17A, 18A) which is part of said mobile part (17, 18) and faces said first lip (15A, 16A), being in contact with said second side (104) of said card (100) in said inclined position,
- abutment means (14) for halting insertion of said card (100) in said inclined position.

3. Connector according to claim 1 or claim 2 characterised in that said holding means comprise:
- said fixed part (15, 16) extending said frame (10) inwardly and having a lower edge parallel to said median plane (P) in contact with said first side (103) of said card (100) in said reading position near said first edge (102),
- said mobile part comprising an elongate elastic member (17, 18) having one end (17B, 18B) bearing on said card (100) and pressing said card against said lower edge of said fixed part (15, 16) and against the lugs (19A) of an elastic retainer (19) opposite said fixed part (15, 16), said one end (17B, 18B) being disposed in the vicinity of said fixed part (15, 16).

4. Connector according to claim 2 or claim 3 characterised in that said first lip (15A, 16A) is bevelled to mate with a portion of said first side (103) of said card (100) in said inclined position.

5. Connector according to any one of claims 2 to 4 characterised in that said second lip (17A, 18A) is bevelled to mate with a portion of said second side (104) of said card (100) in said inclined position.

6. Connector according to any one of claims 2 to 5 characterised in that said abutment means (14) comprise a plurality of parts extending said frame (10) inwardly and each having an upper edge parallel to said median plane (P).

7. Connector according to any one of claims 2 to 6 characterised in that said abutment means (14) comprise said contact members (11).

8. Connector according to any one of claims 1 to 7 characterised in that said frame (10) further comprises means for verifying the presence of said card (100) and that said card is in the correct position.

9. Connector according to any one of claims 1 to 8 characterised in that said frame (10), said locating means (14, 15, 16, 17, 18) and said holding means (15, 17; 16, 18; 19) are all parts of a single component moulded from plastics material.

10. Connector according to any one of claims 1 to 9 characterised in that elastic retainers are fitted all around said frame.
